# EUROPÄISCHE PATENTANMELDUNG

(11) **EP 2 730 524 A1**
(43) Veröffentlichungstag der Anmeldung: **14.05.2014**
(21) Anmeldenummer: 13179421.6
(22) Anmeldetag: 06.08.2013
(51) Int. Cl.: B65D 88/54, B60P 1/00, B65G 67/00

(54) **Container zur Beförderung eines Ladungsträgers, sowie Fahrzeug und Logistiksystem**

(30) Priorität: 07.11.2012 DE 102012220252
(71) Anmelder: Buse, Heinz, 26160 Bad Zwischenahn (DE)
(72) Erfinder: Buse, Heinz, 26160 Bad Zwischenahn (DE)
(74) Vertreter: Eisenführ Speiser

(57) **Zusammenfassung**

Die Erfindung betrifft einen Container (1, 51) zur Beförderung eines Ladungsträgers auf einem Fahrzeug (100), wobei der Ladungsträger (300, 301) an die Abmessungen des Container-Inneren angepasst ist, mit einer Containerbodeneinheit (7, 57), welche an mehreren Stellen mit dem Fahrzeug (100) verriegelbar ist, und einer Laderaumöffnung (9, 59), welche an einer Seite des Containers (1, 51) angeordnet ist.

Die Erfindung betrifft insbesondere einen Container (1, 51) der einen Verladeschlitten (17, 67) aufweist, welcher Kopplungsmittel zum Fassen des Ladungsträgers aufweist, und auf der Containerbodeneinheit (7, 57) in Längsrichtung des Containers (1, 51) verfahrbar ist, um den Ladungsträger (300, 301) in gekoppeltem Zustand entlang einer Ladefläche (11, 61) des Containers (1, 51) zu bewegen.

## Beschreibung

Die vorliegende Erfindung betrifft einen Container zur Beförderung eines Ladungsträgers auf einem Fahrzeug, wobei der Ladungsträger an die Abmessungen des Container-Inneren angepasst ist, mit einer Containerbodeneinheit, welche an mehreren Stellen mit dem Fahrzeug verriegelbar ist, und einer Laderaumöffnung, welche an einer Stirnseite des Containers angeordnet ist. Der zu befördernde Ladungsträger ist hierbei ein Ladungsträger für ein Logistiksystem zur Übergabe des Ladungsträgers von dem Container oder zur Übergabe des Ladungsträgers an den Container, weswegen die Erfindung ferner ein solches Logistiksystem und einen mit dem Container und dem Logistiksystem zusammenwirkenden Ladungsträger betrifft (beispielsweise auf Wechselbrücken).

Bekannte Logistiksysteme werden dazu verwendet, Waren von Containern, wahlweise allein oder auf Fahrzeugen, zu übernehmen und die Waren an Lagerbereiche zu übergeben, oder in umgekehrter Reihenfolge Waren aus Lagerbereichen zu entnehmen und an die Container bzw. Fahrzeuge zu übergeben. Hierbei werden bei bekannten Systemen vorzugsweise Ladungsträger verwendet, die an die Größe der sie befördernden Container angepasst sind und ihrerseits eine Vielzahl von Gütern, beispielsweise loses Stückgut oder palettierte Waren, tragen. Die Ladungsträger stellen somit ein Schnellwechselsystem bereit, welches es ermöglicht, in sehr kurzer Zeit Waren aus den Containern zu entnehmen und die Container mit neuen Waren oder leeren Ladungsträgern wieder zu bestücken. Die Ent- und Beladung der Ladungsträger wird losgelöst vom Anlieferprozess mittels der Fahrzeuge bzw. Container von den Logistiksystemen vor Ort bewirkt. Die Effizienz des Warenumschlags wird maßgeblich davon beeinflusst, wie schnell die mittels Container bzw. Fahrzeug angelieferte Ware übernommen bzw. übergeben werden kann, um die bei jedem Warenumschlagspunkt bzw. Logistiksystem nur begrenzt verfügbaren "Andockstationen" für Container bzw. Fahrzeuge schnellstmöglich wieder freizumachen.

EP 1 808 387 A2 offenbart ein Logistiksystem, bei dem die zu be- und entladende Fracht auf einem Ladungsträger gelagert ist, wobei der gesamte Ladungsträger mitsamt seiner Fracht von einem Fahrzeug bzw. auf ein Fahrzeug in einem Arbeitsgang verfrachtet wird.

Damit in der Praxis die Übernahme des Ladungsträgers von dem Container bzw. Fahrzeug bzw. die Übergabe des Ladungsträgers an den Container bzw. das Fahrzeug effizient ausgeführt werden kann, weisen bekannte Logistiksysteme einen Übernahme- und Übergabebereich auf, in dem der Container bzw. das Fahrzeug anordenbar ist, sowie einen Aufnahmebereich für einen Ladungsträger, in welchen hinein der Ladungsträger aus dem Container übergebbar ist und aus welchen heraus der Ladungsträger übernehmbar ist. Ein grundsätzliches Problem hinsichtlich der Systemeffizienz wird darin gesehen, dass das Anordnen des Containers bzw. Fahrzeuges in dem Übernahme- und Übergabebereich stets ein Rangieren des Containers bzw. Fahrzeuges erfordert. Um ein zumindest teilautomatisiertes und somit zeiteffizientes Übernehmen und Übergeben des Ladungsträgers zu ermöglichen, muss die Ausrichtung des Container bzw. Fahrzeugs in engen Bereichen präzise ausgeführt werden. Dies ist zeitaufwendig. Ferner ist die Handhabungseffizienz begrenzt, wenn vor Ort am Warenumschlagslager kein System zum (teil-)automatisierten Übernehmen bzw. Übergeben der Ladungsträger vorhanden ist.

Der vorliegenden Erfindung lag somit die Aufgabe zugrunde, die Zeiteffizienz beim Übernehmen und Übergeben von Ladungsträgern zwischen Containern bzw. Fahrzeugen einerseits und Aufnahmebereichen eines Logistiksystems andererseits zu verbessern.

Die Erfindung löst die ihr zugrunde liegende Aufgabe bei einem Container der eingangs genannten Art, indem der Container einen Verladeschlitten aufweist, welcher Kopplungsmittel zum Fassen des Ladungsträgers aufweist, und indem der Verladeschlitten auf der Containerbodeneinheit in Längsrichtung des Containers verfahrbar ist, um den Ladungsträger in gekoppeltem Zustand entlang einer Ladefläche des Containers zu bewegen.

Die Integration des Verladeschlittens ermöglicht es, mit dem vorbezeichneten Container ein teilautomatisiertes Übernehmen und Übergeben von korrespondierend ausgebildeten Ladungsträgern an jedem Aufstellort des Containers vorzunehmen. Es ist somit möglich, auch Warenumschlagorte zeiteffizient zu betreiben, die ihrerseits keine automatisierten Übernahme- und Übergabestationen zum zumindest teilautomatisierten Übernehmen der Ladungsträger von den Containern bereithalten. Vorzugsweise weist der erfindungsgemäße Container standardisierte Containermaße auf und ist beispielsweise ausgeführt als 20-Fuß- oder 40-Fuß ISO-Container. Ein solcher Container ist trotz integriertem Verladeschlitten weiterhin mittels gängiger Fahrzeuge transportierbar. Eine andere Ausführungsform des erfindungsgemäß ausgebildeten Containers sieht eine nicht reversibel lösbare Anordnung eines als Kofferaufbau ausgebildeten Containers an einem Auflieger eines Fahrzeuges vor. Somit kann der Container am Auflieger nicht ausgetauscht werden. Unter dem Begriff Auflieger sind sowohl gängige Sattelauflieger zu verstehen, die an eine Zugmaschine angehängt werden, als auch ein starr mit dem Führerhaus verbundener Fahrgestellbereich eines Lastkraftwagens, auf den ein Iso-Container reversibel aufsetzbar oder ein nicht wechselbarer Kofferaufbau angeordnet ist.

In einer bevorzugten Weiterbildung des Containers weist die Ladefläche eine in Längsrichtung des Containers ausgerichtete Führung auf, innerhalb welcher ein korrespondierend ausgebildeter Abschnitt des Verladeschlittens verfahrbar ist. Dadurch, dass die Führungsnut nicht erhaben auf der Ladefläche vorsteht, sondern in dieser "versenkt" vorgesehen ist, ist die gesamte Ladefläche behinderungsfrei benutzbar und kann von dem Ladungsträger vollständig ausgefüllt werden. In diesem Zusammenhang wird unter einem an das Container-Innere angepassten Ladungsträger verstanden, dass die Länge und Breite des Ladungsträgers nur geringfügig kleiner sind als die Länge und Breite der Ladefläche des Containers. Ein Bewegungsspiel zwischen den beiden relativ zueinander beweglichen Teilen kann ausgebildet sein, allerdings ist das Bewegungsspiel so gering zu halten, dass ein Verkanten und Verklemmen des Ladungsträgers in dem Container vermieden wird.

In einer bevorzugten Ausführungsform ist in der Führung eine Zahnstange ausgebildet, und der Verladeschlitten weist ein oder mehrere korrespondierende Zahnräder auf, welche mit der Zahnstange in Eingriff stehen und mittels eines Motors angetrieben sind. Hierdurch wird ein platzsparender Antrieb gewährleistet, mit dem gleichzeitig aufgrund der Möglichkeit, zwischen Motor und den Zahnrädern unterschiedliche Über- oder Untersetzungen getriebetechnisch zu realisieren, hohe Bewegungsgeschwindigkeiten und/oder hohe Antriebskräfte erreichbar sind.

Vorzugsweise ist die wenigstens eine Zahnstange an einer der bevorzugt parallel zur Bewegungsrichtung des Ladungsträgers ausgerichteten Längsseiten des Containers angeordnet, wodurch eine behinderungsfreie Nutzung der gesamten Ladefläche des Containers gewährleistet ist. Zudem wird die Führung für den Verladeschlitten innerhalb des Containers vorzugsweise entlang der Container-Längsseiten ausgebildet, wobei die Führungsteile teilweise oder auch vollständig in die Ladefläche des Containers eingelassen sind.

Vorzugsweise weisen die Kopplungsmittel einen ersten Schieber auf, welcher einen Kupplungskopf zum formschlüssigen Eingreifen in eine korrespondierend ausgebildete Ausnehmung in dem Ladungsträger aufweist, wobei der erste Schieber an dem Verladeschlitten höhenverstellbar ist. Durch Höhenverstellen des ersten Schiebers ist ein Ineingriffbringen und Außereingriffbringen des Kupplungskopfes relativ zu der korrespondierenden Ausnehmung in dem Ladungsträger ermöglicht. Zudem können durch den höhenverstellbaren Schieber Ladungsträger unterschiedlicher Dicken gefasst und verladen werden.

In einer weiteren bevorzugten Ausführungsform weisen die Kopplungsmittel einen zweiten Schieber auf, welcher einen Kupplungskopf zum formschlüssigen Eingreifen in die korrespondierend ausgebildete Ausnehmung in dem Ladungsträger aufweist, wobei der zweite Schieber an dem Verladeschlitten höhenverstellbar ist. Der zweite Schieber ist vorzugsweise um eine horizontale Achse zwischen einer Bereitschaftsstellung und einer Eingriffsstellung hin- und herschwenkbar. Die Bereitschaftsstellung ist vorzugsweise eine Stellung des Schiebers in vertikaler Richtung. Hierdurch wird der Platzbedarf (in horizontaler Richtung) des Verladeschlittens insgesamt in der Bereitschaftsstellung minimiert. Die Eingriffsstellung ist vorzugsweise erreicht, wenn der zweite Schieber horizontal ausgerichtet ist. Hierdurch wird eine optimale Kraftübertragung auf den Ladeschlitten erreicht.

Weiter vorzugsweise weist der Kupplungskopf des ersten Schiebers in horizontaler Richtung einen ersten Abstand zu dem Verladeschlitten auf, und der Kupplungskopf des zweiten Schiebers weist in horizontaler Richtung einen zweiten Abstand zu dem Verladeschlitten auf, wobei der zweite Abstand größer ist als der erste Abstand, wenn sich der zweite Schieber in der Eingriffsstellung befindet. Hierdurch wird ein wesentlicher Vorteil erreicht: Bei der Verwendung des Containers im Zusammenspiel mit einem Übergabesystem, welches einen Übernahme- und Übergabebereich zum Anordnen des Containers aufweist, sowie einen Aufnahmebereich für den Ladungsträger, in welchen hinein der Ladungsträger aus dem Container übergeben werden soll, und aus welchem heraus der Ladungsträger übernommen werden soll, und die beiden Bereiche zueinander benachbart angeordnet sind, ist es nötig oder wünschenswert, den Ladungsträger nicht nur bis zur Ladeflächenkante mittels des Verladeschlittens schieben zu können, sondern auch darüber hinaus, um einen vorbestimmten Abstand zwischen der Ladefläche und dem Ladungsträger überbrücken zu können und den Ladungsträger in eine gewünschte Endposition im Aufnahmebereich verbringen zu können. Hierzu ist der zweite Schieber länger ausgebildet als der erste Schieber. Besonders bevorzugt wird der Ladungsträger auf der Ladefläche in vollständig eingeladener (End-)Position von dem ersten Schieber gefasst und für eine erste Wegstrecke mittels des Verladeschlittens bei in Eingriff stehendem erstem Schieber in Richtung der Laderaumöffnung bzw. aus der Laderaumöffnung herausbewegt. Nach Zurücklegen dieser ersten Teilstrecke ist der erste Schieber vorzugsweise außer Eingriff mit dem Ladungsträger zu bringen, der Verladeschlitten ausreichend weit entgegen der vorherigen Bewegungsrichtung des Verladeschlittens zurückzubewegen, so dass der zweite Schieber aus der Bereitschaftsstellung in die Eingriffsstellung verschwenkt werden kann. Bei oder nach Erreichen der Eingriffsstellung des zweiten Schiebers wird dieser durch Höhenverstellen in Eingriff mit dem Ladungsträger gebracht, und der Verladeschlitten kann die restliche Strecke entlang der Ladefläche des Containers verfahren werden. Durch die größere Länge des zweiten Schiebers relativ zu dem ersten Schieber wird der Ladungsträger über die Kante der Ladefläche hinaus aus dem Container herausbefördert. Das Einladen eines Ladungsträgers vollzieht sich vorzugsweise in exakt umgekehrter Reihenfolge, wobei zunächst der zweite Schieber den Ladungsträger fasst, eine erste Teilstrecke in den Container hinein verfährt und sodann durch Anheben und Wegschwenken des zweiten Schiebers und anschließendem Annähern des Verladeschlittens mit dem ersten Schieber an den Ladungsträger wieder in Eingriff mit diesem gebracht wird. Mit dem ersten Ladungsträger wird sodann der restliche Weg entlang der Ladefläche bis zum Erreichen der Endposition des Ladungsträgers zurückgelegt. Vorteil an dieser Ausgestaltung mit zwei unterschiedlich langen Schiebern ist derjenige, dass aufgrund des kürzeren ersten Schiebers der Verladeschlitten sehr nah an dem Ladungsträger angeordnet sein kann, was eine maximale Raumausbeutung im Container-Inneren ermöglicht. Durch den längeren zweiten Schieber wird hingegen die Reichweite des Verladeschlittens zum Erfassen eines außerhalb des Containers befindlichen Ladungsträgers deutlich erweitert.

Vorzugsweise sind der erste und zweite Schieber an ein- und derselben Hubeinheit des Verladeschlittens angeordnet.

In einer weiteren bevorzugten Ausführungsform weist der Container an seiner der Laderaumöffnung gegenüberliegenden Seite eine Ausnehmung zur, vorzugsweise vollständigen, Aufnahme des Verladeschlittens auf. Besonders bevorzugt ist der Verladeschlitten inklusive des ersten und zweiten Schiebers (in Bereitschaftsstellung) vollständig derart in der Ausnehmung versenkbar, dass die Ladefläche des Containers vollständig frei von Teilen des Verladeschlittens ist. Vorzugsweise ist die Ausnehmung als Durchbruch in der korrespondierenden Containerwand ausgebildet. Weiter vorzugsweise ist der den Verladeschlitten aufnehmende Raum durch eine Abdeckung verschlossen, die außen an dem Container angebracht wird und um den Durchbruch herum als Wetterschutz dient.

Vorzugsweise ist gemäß einer anderen Weiterbildung des erfindungsgemäßen Containers der Verladeschlitten mit seinem ersten und zweiten beweglich aufgenommenen Schieber zur Containerbodeneinheit höhenverstellbar. Mit Hilfe des in der Höhe verstellbaren Verladeschlittens kann ein einfacher Wechsel bzw. Austausch eines beispielsweise sich im Container befindlichen, leeren Ladungsträger durch einen im Übernahme- und Übergabebereich eines Logistiksystems zum Weitertransport bereitgestellten, beladenen Ladungsträger erfolgen. Durch die Höhenverstellbarkeit des Verladeschlittens der gemeinsam mit den daran angeordneten Schiebern in seiner Arbeitshöhe oberhalb der Ladefläche des Containers verstellbar ist, können die Kopplungsmittel zudem jeweils sicher mit dem entsprechend zu bewegenden Ladungsträger gekoppelt werden. Der erste und zweite Schieber weisen jeweils einen Kupplungskopf zum formschlüssigen Eingreifen in jeweils korrespondierend ausgebildete Ausnehmungen an den Ladungsträgern auf.

Bevorzugt sind der erste und zweite Schieber um eine vertikale Achse zwischen jeweils einer Bereitschaftsstellung und einer Eingriffsstellung am Ladungsträger hin und her schwenkbar. Der erste und der zweite Schieber werden bevorzugt in einer horizontalen Ebene verschwenkt, wodurch der Kontakt mit beispielsweise auf dem Ladungsträger angeordneten Waren in jedem Falle vermieden wird. Die Bereitschaftsstellung des ersten und zweiten Schiebers ist vorzugsweise in einer Position quer zur Längsrichtung des den Ladungsträger aufnehmenden Containers. In der Eingriffsstellung, in welcher die, vorzugsweise die Form eines Haken aufweisenden, Kupplungsköpfe in die Ausnehmung am Ladungsträger eingreifen, weisen die Schieber eine Ausrichtung parallel zur Längsrichtung des Containers und somit parallel zur Bewegungsrichtung des aus dem oder in den Container zu bewegenden Ladungsträger auf.

Die Erfindung betrifft gemäß einem weiteren Aspekt ein Fahrzeug zur Beförderung eines Ladungsträgers mit einem Auflieger zur Aufnahme des Containers, und einem auf dem Auflieger angeordneten Container, wobei der Ladungsträger an die Abmessung des Container-Inneren angepasst ist. Die Erfindung löst die ihr zugrunde liegende, eingangs bezeichnete Aufgabe bei einem Fahrzeug der vorstehenden genannten Art, indem der Container nach einer der vorstehend beschriebenen bevorzugten Ausführungsformen ausgebildet ist.

Vorzugsweise ist der Container auf dem Auflieger an mehreren Stellen verriegelbar. Die Befestigung des Containers an dem Auflieger kann beispielsweise mittels ContainerEckbeschlägen und mittels in diese eingreifender Twistlocks erfolgen.

Unter dem Begriff Container ist vorliegend ein Behälter für zu transportierende Waren und Güter zu verstehen, der beispielsweise als Iso-Container ausgebildet ist, welcher beliebig am Auflieger des Fahrzeugs gewechselt werden kann und mit dem Auflieger reversibel koppelbar ist, oder als nicht wechselbarer, grundsätzlich nicht vom Auflieger trennbarer Kofferaufbau ausgeführt ist. Unabhängig von seiner grundlegenden Ausgestaltung kann der gesamte Container während des Umladevorganges eines Ladungsträgers in einer bevorzugt horizontalen Ebene oberhalb des Auflieger bewegt werden. Während des Transports der Container wird dieser mit geeigneten Verriegelungselementen an der Ladefläche des Aufliegers verbunden. Unter Auflieger werden unter anderem Sattelauflieger sowie Aufnahmebereiche eines Fahrgestells eines üblichen Lastkraftwagens verstanden, auf denen die Container wechselbar oder nicht wechselbar aufgenommen sind.

Gemäß einer bevorzugten Weiterbildung der Erfindung ist eine Ladefläche des Containers relativ zu dem Auflieger des Fahrzeugs in einer horizontalen Ebene translatorisch bewegbar. Weiter vorzugsweise ist die Ladefläche des Containers relativ zu dem Auflieger um eine vertikale Achse verschwenkbar.

In einer ersten bevorzugten Alternative ist hierbei der gesamte Container relativ zu dem Auflieger bewegbar bzw. verschwenkbar. Dies ist insbesondere dann ermöglicht, wenn der Container von dem Auflieger entriegelt ist. Gemäß einer weiteren Alternative ist der Container derart modifiziert, dass der Container-Unterboden mittels bekannter Verriegelungselemente mit dem Auflieger verbindbar ist, und ein oberhalb des Unterbodens beweglicher Aufbau relativ zu dem Unterboden translatorisch bewegbar bzw. verschwenkbar ist. Unterboden und Ladefläche können Teil der Containerbodeneinheit sein, und die Ladefläche kann gemeinsam mit dem Containeraufbau bewegbar sein.

Vorzugsweise weist der Container Mittel zum translatorischen Bewegen und/oder Verschwenken um die vertikale Achse auf. Hierdurch wird ermöglicht, dass ein Verschwenken bzw. translatorisches Bewegen des Containers auf jedem konventionellen Auflieger eines Fahrzeugs ermöglicht wird.

Der Vorteil, den die translatorische Bewegbarkeit und Verschwenkbarkeit um die vertikale Achse mit sich bringt, wird darin gesehen, dass bekannte Fahrzeuge, beispielsweise Lastkraftfahrzeuge, von geschulten Fahrern zwar sehr präzise rangierbar sind. Unter hohem Zeitdruck muss die Anzahl von Bewegungszügen im Rangierbetrieb allerdings eingeschränkt bleiben. Hierbei ist es oft nur möglich, den Container bzw. Fahrzeugauflieger ungefähr seitlich und winkelmäßig zu dem Aufnahmebereich des Logistiksystem in den Übergabe- und Übernahmebereich für das Fahrzeug bzw. den Container zu positionieren. Nach Beenden dieses begrenzten Rangiervorgangs wird die Ladefläche des Containers um einige Grad bzw. einen gewissen translatorischen Versatz "schief" zu dem idealen Ausrichtungsverhältnis bezüglich des Aufnahmebereiches positioniert sein. Die Erfindung erlaubt ein solches begrenztes Rangieren allerdings ausdrücklich, indem der Container gerade zum Ausgleich dieser einkalkulierten Ungenauigkeit seitlich verschiebbar und im Winkel um eine vertikale Achse des Aufliegers verstellbar ist. Nach Erreichen der ungefähren Rangierposition ist ein Feinjustieren der Ladeflächenausrichtung auf den Aufnahmeberiech eines Logistiksystems durch die Erfindung ermöglicht. Hierdurch wird dem Fahrer des Fahrzeugs ein aufwändigeres Rangieren erspart, das Justieren der Containerposition kann manuell oder automatisiert in wesentlich geringerer Zeit erfolgen.

Vorzugsweise weisen die Mittel zum translatorischen Bewegen und/oder Verschwenken der Ladefläche einen ersten, in einem proximalen Bereich des Containers angeordneten Antrieb auf sowie einen zweiten, in einem distalen Bereich des Containers angeordneten Antrieb zum jeweiligen Bewegen der Ladefläche relativ zu dem Auflieger, wobei die Antriebe wahlweise synchron oder asynchron steuerbar sind. Unter proximalem Bereich wird hierbei die der Laderaumöffnung zugewandte Hälfte des Containers verstanden, während unter dem distalen Bereich die der Laderaumöffnung abgewandte Containerhälfte verstanden wird. Mittels synchronen Antriebs beider Antriebe wird eine translatorische Bewegung des Containers in der horizontalen Ebene erreicht. Hierdurch lässt sich der Container im Wesentlichen parallel zur Längsachse des Aufliegers nach links und rechts verschieben. Bei einem asynchronen Betrieb des ersten und zweiten Antriebs wird der eine beider Antriebe mit einer anderen Geschwindigkeit oder in einer anderen Bewegungsrichtung angesteuert als der jeweils andere Antrieb. Hierdurch wird ein Verschwenken des Containers um eine vertikale Achse, gegebenenfalls kombiniert mit einer translatorischen Bewegung, in der horizontalen Ebene erreicht.

Gemäß einer alternativen Ausführungsform der Erfindung weist das Fahrzeug Mittel zum Verschwenken um die vertikale Achse und/oder zum translatorischen Bewegen des Containers relativ zum Auflieger auf. Damit ist erreicht, dass mit dem Fahrzeug jeder konventionelle, wechselbare Container, ohne aufwendige konstruktive Veränderungen am Container vorzusehen, oberhalb des Aufliegers translatorisch bewegt und/oder um eine vertikale Achse verschwenkt werden kann. Zudem können die Mittel zum Verschwenken bzw. translatorischen Bewegen des Containers relativ einfach in das Fahrgestell eines Sattelaufliegers oder eines Lastkraftwagens integriert und, im Vergleich zu Containern mit daran angeordneten Mitteln, eine einfache Energieversorgung der Mittel gewährleistet werden.

Vorzugsweise sind an der dem Auflieger zugewandten Unterseite der Containerbodeneinheit Kopplungselemente angeordnet, die mit den am Auflieger angeordneten Mitteln zum Bewegen und/oder Verschwenken des Containers korrespondieren. Über die Kopplungselemente ist eine einfache und sichere Kraftübertragung von den Mitteln zum Bewegen bzw. Verschwenken des Containers auf der Ladefläche des Aufliegers möglich.

In einer anderen Weiterbildung der Erfindung sind zwischen dem Container und dem Auflieger eine oder mehrere Gleitlagerplatten vorgesehen, welche ein reibungsarmes Bewegen bzw. Verschwenken des Containers oberhalb des Aufliegers bewirken. Aufgrund der verringerten Reibung zwischen Container und Ladefläche können gängige Antriebsmittel zum Bewegen bzw. Verschwenken des Containers eingesetzt werden, wie zum Beispiel Elektromotoren, die vorzugsweise über ein Koppelgetriebe an der Unterseite der Containerbodeneinheit angreifen. Eine bevorzugte Ausführungsform der Erfindung sieht vor, dass die Unterseite der Containerbodeneinheit des Container sowie die Ladefläche des Fahrgestell des Aufliegers mit Gleitlagerplatten ausgerüstet sind, die vorzugsweise im Wesentlichen deckungsgleich zueinander angeordnet sind.

Vorzugsweise weist der Container eine elektronische Steuereinheit auf, welche zum Steuern des ersten Antriebs und des zweiten Antriebs eingerichtet ist. Alternativ zum manuellen Steuern der Ladeflächenbewegung ist hiermit ein automatisiertes Bewegen realisierbar.

Der Container weist in einer bevorzugten Ausführungsform einen Positionsfinder auf, welcher mit der Steuereinheit kommunizierend verbunden und dazu ausgebildet ist, ein Signal an die Steuereinheit abzugeben, wenn die Anwesenheit eines Reflektors detektiert wird. Durch das Bereitstellen des Positionsfinders wird es ermöglicht, den Container durch translatorisches Bewegen und/oder Verschwenken in der horizontalen Ebene auf einen den Reflektor aufweisenden Gegenstand, vorzugsweise auf eine Referenzgeometrie in einem Aufnahmebereich für einen Ladungsträger, oder einem Übernahme- und Übergabebereich, in dem der Container anordenbar ist, und/oder dazwischen, beispielsweise an einer Ladekante, auszurichten. Hierbei ist der Reflektor bevorzugt an dem mit dem Container zusammenwirkenden Bereich an einer normierten Stelle vorzugsehen, damit die Steuereinheit in der Lage ist, beim Detektieren der Anwesenheit des Reflektors die Position des Containers relativ zu dem Logistiksystem zu bestimmen, in welchem der Container bewegt wird. Der Positionsfinder ist vorzugsweise als optische und/oder akustische Sender/Empfänger-Einheit ausgebildet.

Vorzugsweise weist der Container zwei oder mehr Abstandssensoren auf, welche jeweils zum Erfassen eines Abstandes zu einem entfernten Objekt, vorzugsweise der Referenzgeometrie, eingerichtet sind. Die Abstandssensoren dienen dem Zweck, nach erfolgtem Ausrichten an dem entfernten Objekt zu ermitteln, ob das Objekt bzw. der Container relativ zueinander schräg, also nicht in einem rechten Winkel, oder seitlich versetzt zueinander angeordnet sind. Hierzu sind die Abstandssensoren vorzugsweise vorab auf einen Zustand "parallel" und/oder auf einen Zustand "fluchtend" kalibrierbar.

Die Abstandssensoren sind vorzugsweise mit der Steuereinheit kommunizierend verbunden und dazu ausgebildet, jeweils ermittelte Abstandswerte an die Steuereinheit abzugeben, vorzugsweise wenn der Positionsfinder die Anwesenheit des Reflektors detektiert.

Weiter vorzugsweise ist die Steuereinheit dazu eingerichtet, mittels der an die Steuereinheit abgegebenen Abstandswerte einen Winkel zwischen der Ladefläche und dem entfernten Objekt zu berechnen. In einer bevorzugten Ausführungsform der Erfindung ist die Steuereinheit weiter dazu eingerichtet, bei einem berechneten Winkel ungleich null den ersten Antrieb und den zweiten Antrieb derart asynchron zu steuern, dass der Winkel auf null verringert wird. Vorzugsweise erfolgt die Steuerung des ersten und zweiten Antriebs derart, dass auch der Positionsfinder auf den Reflektor ausgerichtet bleibt. Durch die zusammengesetzte Bewegung des ersten und zweiten Antriebs ergibt sich also eine Schwenkbewegung um eine vertikale Achse. Die vertikale Achse ist hierbei ja nach Art der unterschiedlichen Steuerung des ersten Antriebs und des zweiten Antriebs eine stationäre Achse oder eine sich auf einer Momentanpolbahn bewegende Achse. Ferner ist vorzugsweise die Steuereinheit dazu eingerichtet, einen vorab detektierten und/oder einen beim Verschwenken entstehenden Versatz zwischen der Ladefläche und der Referenzgeometrie durch translatorisches Bewegen der Ladefläche auszugleichen.

Die Erfindung betrifft, wie eingangs angedeutet, ferner ein Logistiksystem zur Übernahme eines Ladungsträgers von einem Container und zur Übergabe des Ladungsträgers an den Container, mit einem Container zur Beförderung des Ladungsträgers, einem Ladungsträger, der an die Abmessungen des Container-Inneren angepasst ist, einem Übernahme- und Übergabebereich in dem der Container anordenbar ist, einem Aufnahmebereich für einen Ladungsträger, in welchen hinein der Ladungsträger aus dem Container übergebbar und aus welchem heraus der Ladungsträger übernehmbar ist. Die Erfindung löst die ihr zugrunde liegende Aufgabe dadurch, dass der Container nach einer der vorstehend beschriebenen bevorzugten Ausführungsformen ausgebildet ist. Gemäß einer bevorzugten Weiterbildung wirkt in dem Logistiksystem ferner ein Fahrzeug gemäß einer der vorstehend beschriebenen bevorzugten Ausführungsformen mit.

Vorzugsweise ist der Container auf einem Fahrzeug gemäß einer der vorstehend beschriebenen bevorzugten Ausführungsformen angeordnet, und der Übernahme- und Übergabebereich ist mit dem Fahrzeug befahrbar.

Weiter vorzugsweise sind der Aufnahmebereich für den Ladungsträger und der Übernahme- und Übergabebereich für den Container und/oder das Fahrzeug zueinander benachbart angeordnet, und der Aufnahmebereich weist bodenseitig ein oder mehrere Führungselemente auf, die den Aufnahmebereich begrenzen und an die Abmessungen des Ladungsträgers angepasst sind.

In einer anderen bevorzugten Weiterbildung der Erfindung weist der Übergabe- und Übernahmebereich, vorzugsweise angrenzend an der Andockstation, eine stationäre höhenverstellbare Hubeinheit auf, mit Hilfe der ein Wechsel bzw. Austausch eines beispielsweise sich im Container befindlichen unbeladenen Ladungsträgers durch einen sich im Aufnahmebereich des Logistiksystems befindlichen beladenen Ladungsträger vereinfacht erfolgen kann. In einer weiteren bevorzugten Weiterbildung der Erfindung weist das Fahrgestell unter dem Fahrzeug auf der proximalen Stirnseite, also der der Laderaumöffnung zugeordneten Seite, eine unter dem Fahrzeug befestigte Hubeinheit auf. Je nach Beladungszustand des am Aufnahmebereich befindlichen Ladungsträgers wird das Fahrzeug unter der Laderaumöffnung im Übergabe- und Übernahmebereich mittels einer Hubeinheit entweder über die vorgegebene Bewegungsebene im Aufnahmebereich angehoben oder unterhalb der Bewegungsebene abgesenkt. Um einen einwandfreien Ablauf des Anhebens und Absenkens zu ermöglichen, ist die Federung des Fahrzeugs auf der proximalen Stirnseite während des Vorgangs, vorzugsweise komplett, entlüftet.

Die Erfindung betrifft ferner einen Ladungsträger zur Beförderung in einem Container gemäß einer der vorstehend beschriebenen bevorzugten Ausführungsformen, und/oder zur Beförderung mittels eines Fahrzeugs gemäß einer der vorstehend beschriebenen bevorzugten Ausführungsformen, und/oder zur Verwendung in einem Logistiksystem gemäß einer der vorstehend beschriebenen bevorzugten Ausführungsformen. Der Ladungsträger ist an die Abmessungen des Container-Inneren angepasst und weist eine Ausnehmung an mindestens einer seiner Seitenflächen auf, die zur Aufnahme eines Kopplungsmittels, vorzugsweise des Kupplungskopfes eines ersten und/oder zweiten Schiebers eines Verladeschlittens des Containers angepasst ist. Vorzugsweise ist das Kopplungsmittel, vorzugsweise der Kupplungskopf des jeweiligen Schiebers, formschlüssig mit der Ausnehmung an der Seitenfläche des Ladungsträgers in Eingriff bringbar. Durch die Anordnung der Ausnehmung an der Seitenfläche des Ladungsträgers steht im Wesentlichen die gesamte Ladefläche zum Beladen mit Stückgut oder palettierten Waren zur Verfügung.

Die Erfindung wird im Folgenden anhand eines bevorzugten Ausführungsbeispiels unter Bezugnahme auf die beigefügten Figuren näher beschrieben. Hierbei zeigen
- Figur 1: eine räumliche schematische Darstellung eines Containers gemäß einem ersten Ausführungsbeispiel,
- Figur 2: eine alternative räumliche schematische Darstellung des Containers gemäß Figur 1,
- Figur 3: eine Detailansicht des Containers gemäß Figuren 1 und 2,
- Figur 4: eine weitere Seitenansicht der Detaildarstellung gemäß Figur 3,
- Figur 5: eine räumliche schematische Darstellung eines Fahrzeugs mit einem Container gemäß dem ersten Ausführungsbeispiel.
- Figur 6a-f: Draufsichten auf das Fahrzeug gemäß Figur 5 in verschiedenen Betriebsstellungen,
- Figur 7: eine räumliche schematische Darstellung eines erfindungsgemäßen Logistiksystems mit einem Container gemäß dem ersten Ausführungsbeispiel,
- Figur 8: eine alternative räumliche Ansicht des Logistiksystems gemäß Figur 7, und
- Figur 9a-d: räumliche Darstellungen des Logistiksystems gemäß den Figuren 7 und 8 in verschiedenen Betriebsstellungen.
- Figur 10: eine perspektivische Ansicht eines Aufliegers mit einer Containerbodeneinheit eines Containers gemäß einem weiteren erfindungsgemäßen Ausführungsbeispiel,
- Figur 11: eine perspektivische schematische Darstellung des Verladeschlittens auf der Containerbodeneinheit gemäß Figur 10,
- Figur 12: eine perspektivische Ansicht eines erfindungsgemäß ausgebildeten Aufliegers auf seine Unterseite,
- Figur 13a-i: eine räumliche Darstellung eines weiteren Ausführungsbeispiels eines Logistiksystems in verschiedenen Betriebsstellungen.

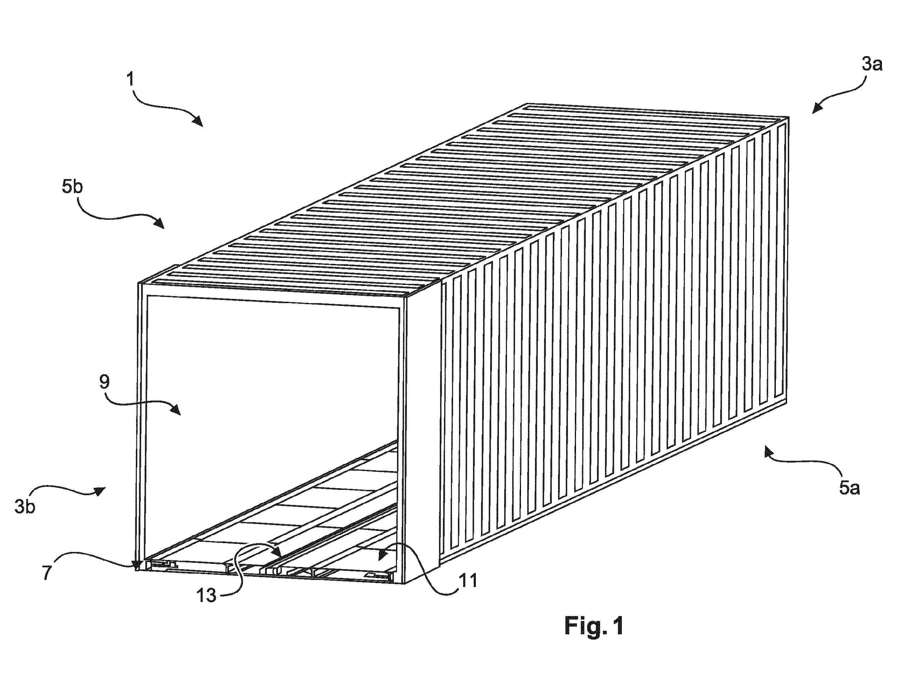

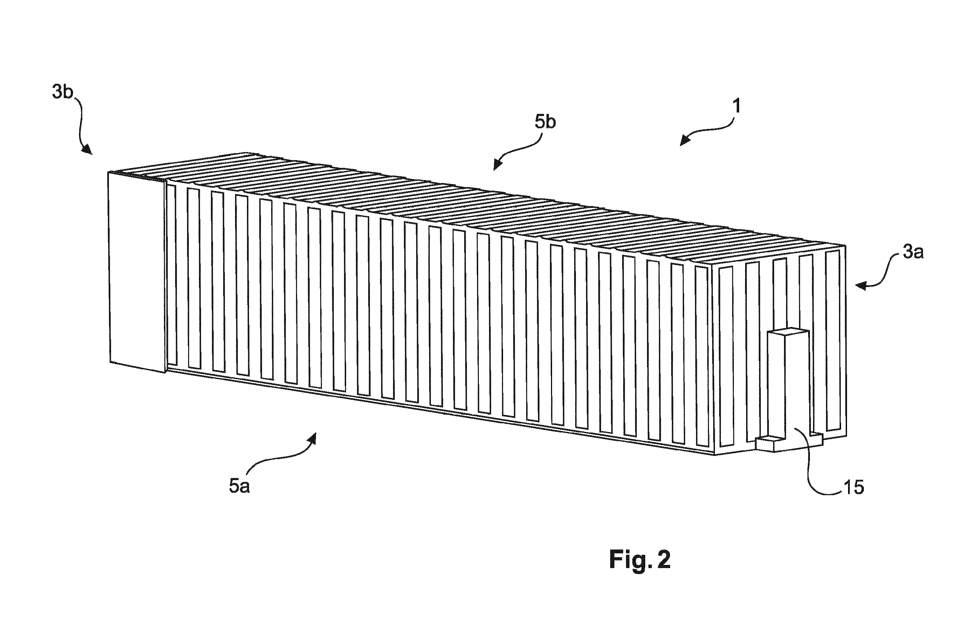

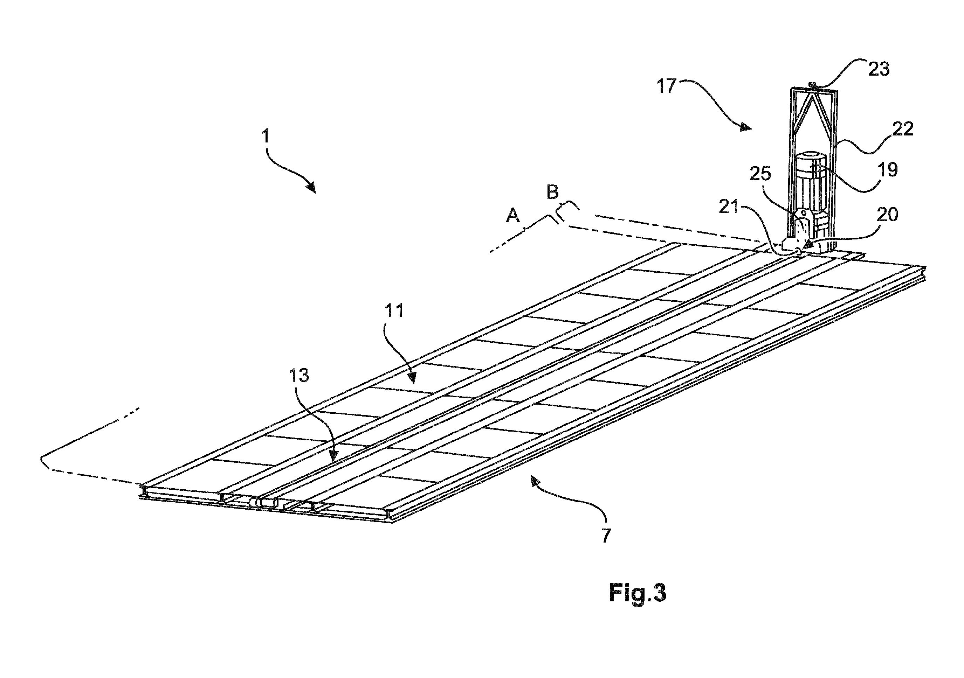

In den Figuren 1 und 2 ist zunächst der äußere Aufbau eines Containers 1 gemäß einer ersten Ausführungsform der vorliegenden Erfindung dargestellt. Der Container 1 weist eine distale Stirnseite 3a und eine proximale Stirnseite 3b auf, wobei unter proximal die der Laderaumöffnung zugewandte Seite verstanden wird. Der Container weist ferner zwei Seitenflächen 5a, 5b auf. In Figur 1 ist die Laderaumöffnung 9 in geöffnetem Zustand abgebildet. Im Inneren des Containers 1 ist eine Container-Bodeneinheit 7 vorgesehen. Auf der Container-Bodeneinheit 7 ist eine Ladefläche 11 angeordnet. In der Ladefläche 11 ist in Form einer Ausnehmung eine Führung 13 eingelassen. Die Führung 13 ist dazu eingerichtet, einen Verladeschlitten (Figur 3) in seiner Verfahrbewegung zu führen.

Auf der distalen Stirnseite 3a des Containers 1 ist eine Abdeckung 15 angebracht. Die Abdeckung 15 begrenzt einen Durchbruch durch die Containerwand an der Stirnseite 3a. Der Durchbruch und die Abdeckung 15 sind dazu eingerichtet, einen Verladeschlitten vollständig aufzunehmen. Hierdurch steht der gesamte Innenraum des Containers bis zur Stirnwand 3a zur Aufnahme eines entsprechend angepassten Ladungsträgers zur Verfügung.

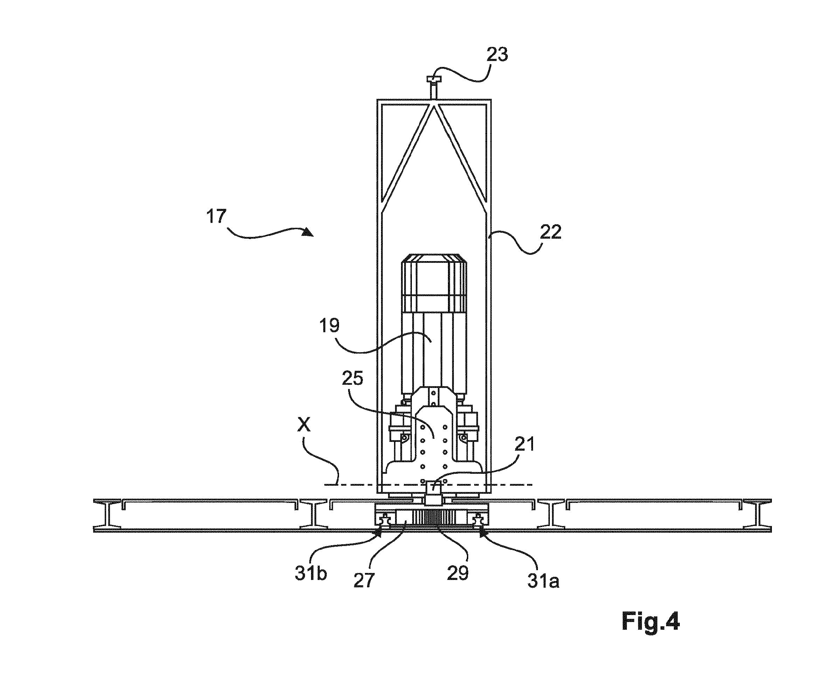

In den Figuren 3 und 4 ist der Container mit ausgeblendeten Containerwänden erneut abgebildet. Figur 3 zeigt die Container-Bodeneinheit 7 des Containers 1 mit der in der Ladefläche 11 vorgesehenen Führung 13. Die Ladefläche 11 erstreckt sich in einem ersten Bereich A. Angrenzend an den ersten Bereich A ist ein zweiter Bereich B vorgesehen, in welchem in Figur 3 ein Verladeschlitten 17 angeordnet ist. Der Bereich B wird von der in Figur 2 gezeigten Abdeckung 15 begrenzt.

Der Verladeschlitten 17 weist einen motorischen Antrieb 19, vorzugsweise ausgebildet als Elektromotor, auf. Mittels des Motors 19 werden ein oder mehrere Zahnräder 29 angetrieben, die mit einer Zahnstange 27 in Eingriff stehen (Figur 4). Hierdurch wird der Verladeschlitten 17, optional zusätzlich geführt durch zusätzliche Schienen 31a, 31 b, entlang der Führung 13 über die Ladefläche 11 bewegt. Der Verladeschlitten 17 weist einen ersten Schieber 20 mit einem ersten Kupplungskopf 21 auf, sowie einen zweiten Schieber 22 mit einem zweiten Kupplungskopf 23. Der erste und zweite Kupplungskopf 21, 23 sind dazu ausgebildet, mit einer korrespondierenden Ausnehmung in einem Ladungsträger formschlüssig in Eingriff gebracht zu werden.

Der erste Schieber 20 und der zweite Schieber 22 sind an einer Hubeinheit 25 angeordnet, welche in der Höhe verstellbar ist, vorzugsweise ebenfalls angetrieben durch den Motor 19 oder einen separaten Motor.

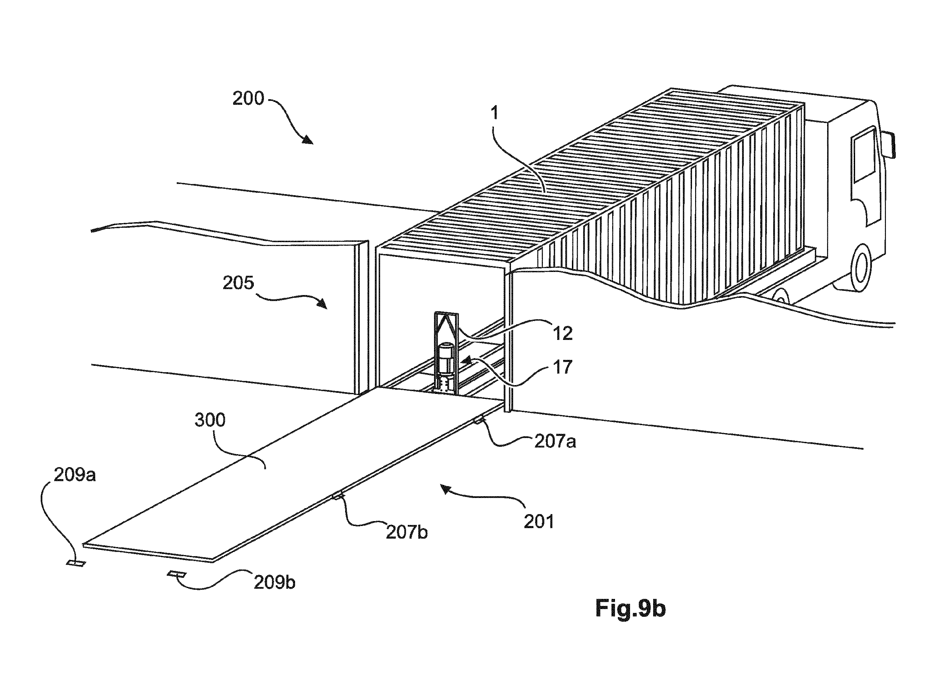

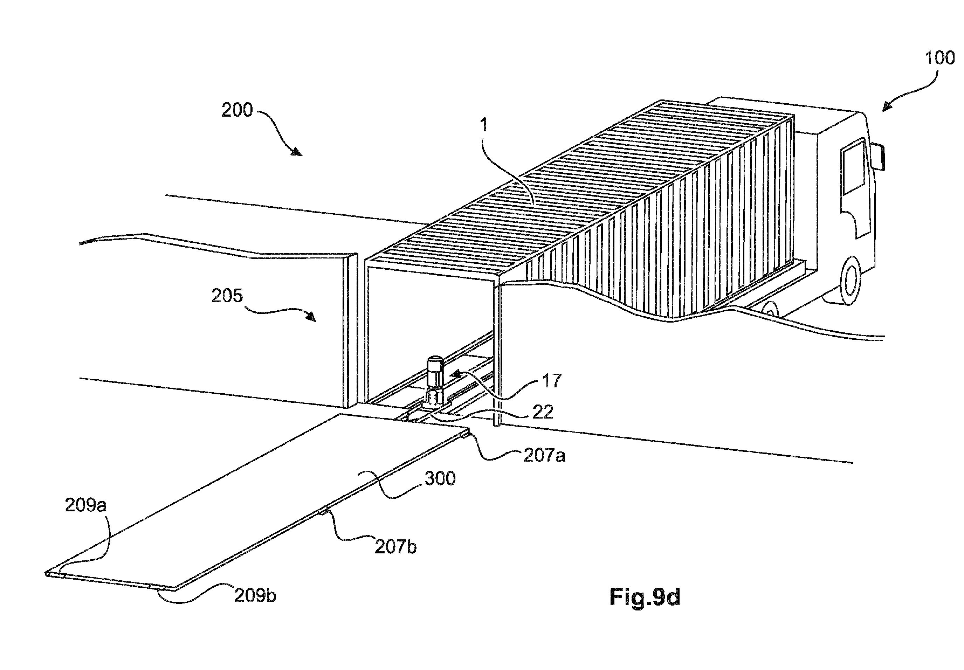

Der zweite Schieber 22 kann um eine horizontale Achse X von der in Figur 3 und 4 gezeigten Bereitschaftsstellung in eine Eingriffsstellung verschwenkt werden (siehe Figur9b-d).

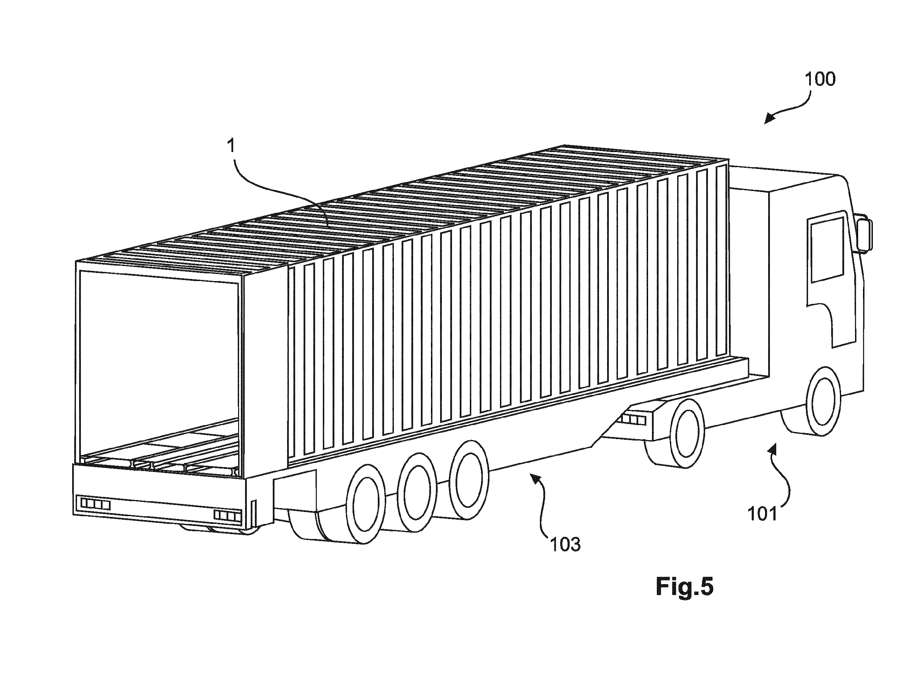

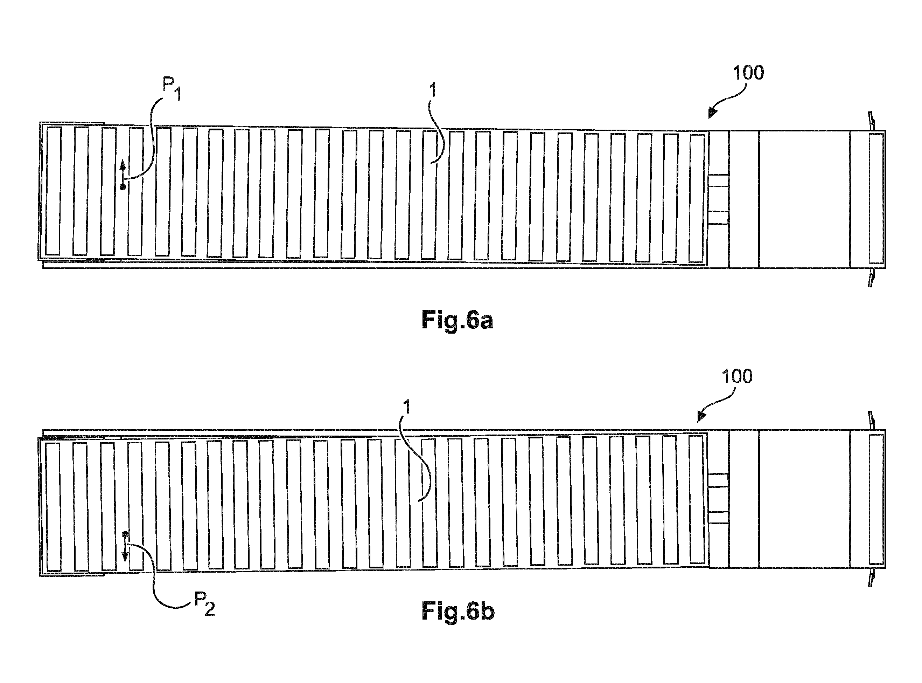

Die Figuren 5 und 6a-f zeigen ein Fahrzeug 100 gemäß einer ersten Ausführungsform der Erfindung mit einem Container 1 gemäß den Figuren 1 bis 4. Bezüglich des Containers wird auf die vorstehenden Ausführungen verwiesen.

Das Fahrzeug 100 weist eine Zugmaschine 101 und einen Auflieger 103 auf. Der Container 1 ist auf dem Auflieger 103 angeordnet und vorzugsweise mittels Containereckbeschlägen oder anderen geläufigen Verriegelungselementen mit dem Auflieger 103 gekoppelt.

Die Figuren 6a-f zeigen verschiedene translatorische Bewegungen und Verschwenkungen des Containers 1 relativ zu dem Auflieger 103 des Fahrzeugs 100 für ein Ausführungsbeispiel, welches einen ersten Antrieb und einen zweiten Antrieb aufweist, wobei der erste Antrieb in einem proximalen Bereich des Containers 1 (in den Figuren6a-f die linke Hälfte des Containers) und einem zweiten Antrieb in einem distalen Bereich des Containers 1 (in den Figuren 6a-f die rechte Hälfte des Containers) aufweist.

In Figur 6a ist der Container mit seinem proximalen Bereich in Richtung des Pfeils P₁ verschwenkt, was durch asynchronen Antrieb erreicht wird. Insbesondere ist der erste Antrieb betätigt worden während der zweite Antrieb nicht betätigt worden ist.

In Figur 6b ist der Container 1 im Vergleich zur Figur 6a in die andere Richtung verschwenkt, indem der erste Antrieb eine Verschwenkung des proximalen Bereichs des Containers 1 in Richtung des Pfeils P₂ bewirkt hat, während der zweite Antrieb nicht betätigt worden ist.

In Figur 6b ist der Container 1 in seinem distalen Bereich verschwenkt worden, indem der zweite Antrieb eine Bewegung in Richtung des Pfeils P₃ bewirkt hat, während der erste Antrieb im proximalen Bereich des Containers 1 nicht betätigt worden ist.

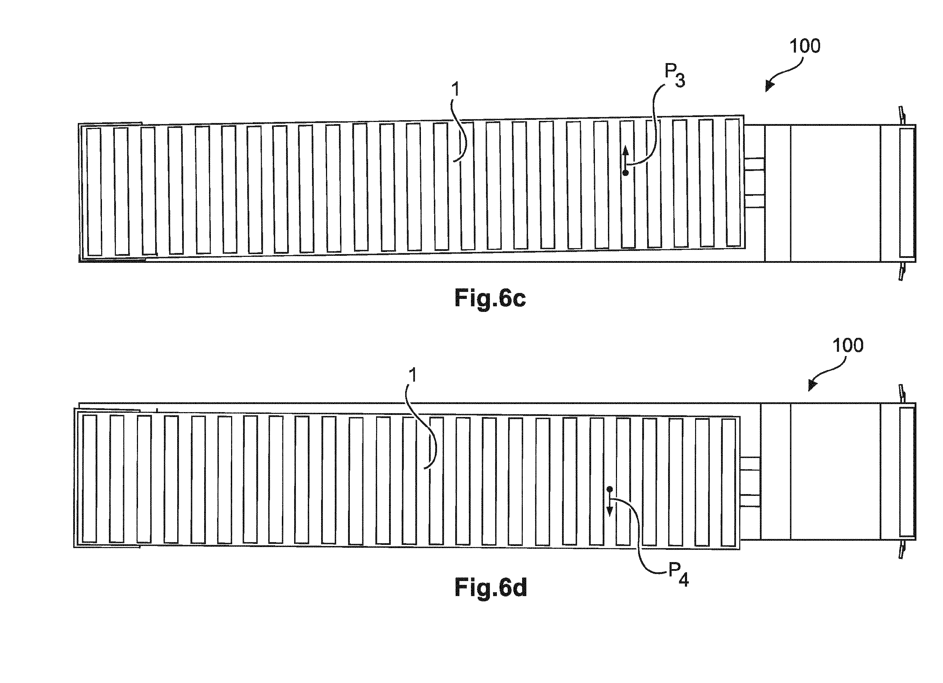

In Figur 6d ist eine Verschwenkbewegung in entgegengesetzter Richtung der Bewegung aus Figur 6c dargestellt. Hier ist der distale Bereich des Containers 1 mittels des zweiten Antriebs in Richtung des Pfeils P₄ verschwenkt worden, während der erste Antrieb nicht betätigt worden ist.

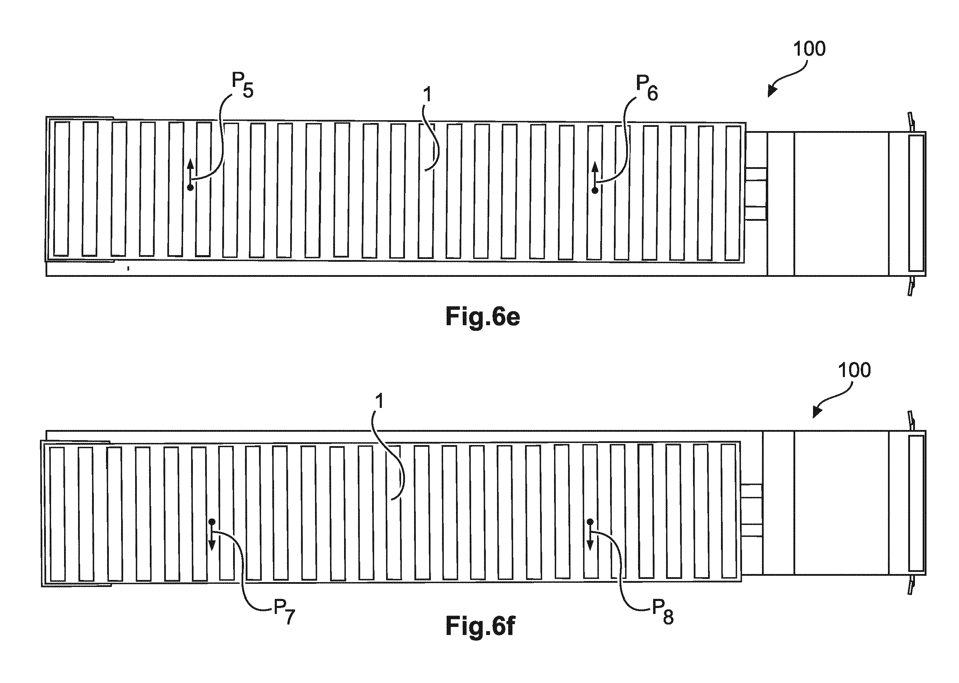

Im Unterschied zu den in den Figuren 6a-d gezeigten asynchronen Antriebsvarianten, in welchen der erste und zweite Antrieb jeweils unterschiedlich voneinander angetrieben worden sind, ist in den Figuren 6e-f ein synchroner Antrieb des ersten und zweiten Antriebs schematisch dargestellt. In Figur 6e sind der erste und zweite Antrieb betätigt worden, um den Container 1 translatorisch in Richtung der Pfeile P₅ und P₆ zu bewegen. Der Container 1 ist im Wesentlichen parallel nach links, bezogen auf die Längsrichtung des Fahrzeugs 100 in Vorwärts-Fahrtrichtung, versetzt worden.

In Figur 6f ist der Container 1 in entgegengesetzter Richtung zu der Bewegung, die in Figur 6e zu sehen war, in Fahrtrichtung des Fahrzeugs 100 parallel zur Längsachse des Aufliegers nach rechts in Richtung der Pfeile P₇, P₈ versetzt. Dies wurde durch synchronen Antrieb der ersten und zweiten Antriebe in die, zur Figur 6e, entgegengesetzte Richtung verwirklicht. Mischformen der in Figuren 6a-f gezeigten Antriebsvarianten der ersten und zweiten Antriebe sind im Rahmen der Erfindung ebenfalls möglich.

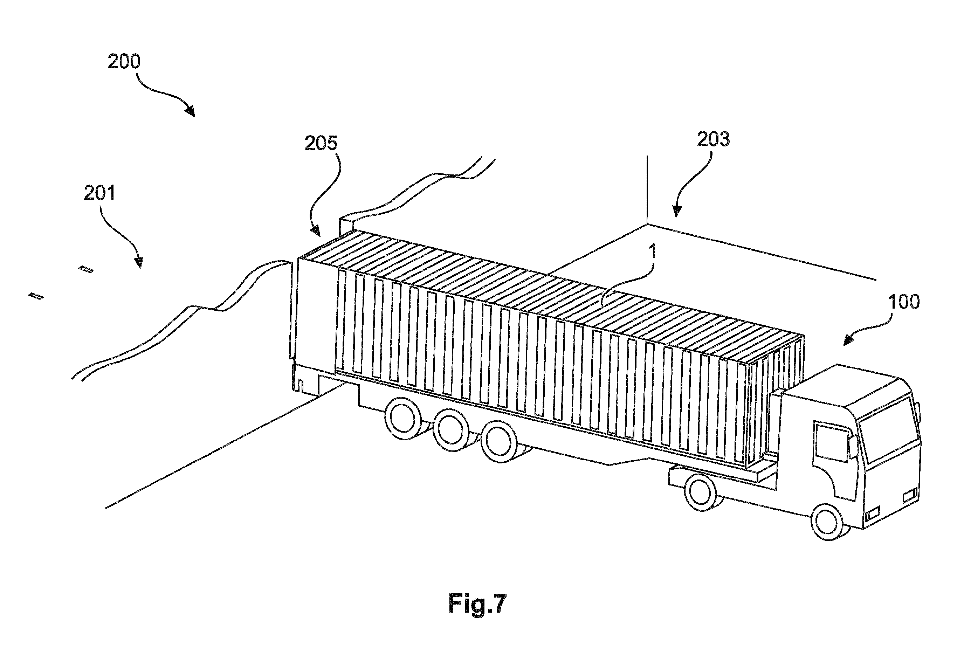

Die Figuren 7 bis 9a-d zeigen ein Logistiksystem 200 gemäß der vorliegenden Erfindung mit einem Container 1 gemäß der Figuren 1 bis 4 und einem Fahrzeug 100 gemäß der Figuren 5 und 6a-f.

In Figur 7 ist zunächst dargestellt, dass das Fahrzeug 100 mitsamt Container 1 in einem Übergabe- und Übernahmebereich 203 des Logistiksystems 200 abgestellt ist. Das Fahrzeug ist vor einer Andockstation 205 positioniert. Die Andockstation 205 trennt den Übernahme- und Übergabebereich 203 von einem Aufnahmebereich 201, der auf der anderen Seite der Andockstation 205 angeordnet ist. Die Übergabe- und Übernahmestation 203 und der Aufnahmebereich 201 sind somit zueinander benachbart und mittels der Andockstation 205 voneinander getrennt. Es ist zu bemerken, dass das Fahrzeug 100 lediglich ungefähr senkrecht zu der Andockstation 205 positioniert sein muss. Eine genaue Ausrichtung des Containers 1, insbesondere der Ladefläche des Containers 1 zu dem Aufnahmebereich 201 erfolgt erforderlichenfalls durch Verstellen, insbesondere translatorisches Bewegen und/oder Verschwenken des Containers 1 bzw. der Ladefläche relativ zu dem Auflieger des Fahrzeugs 100.

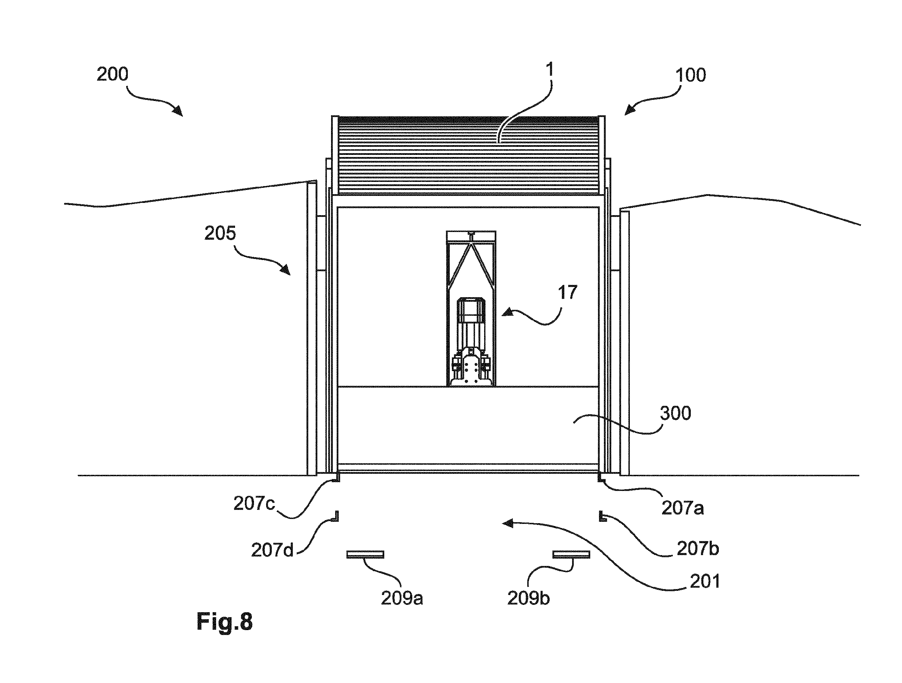

Figur 8 zeigt eine Draufsicht auf das Fahrzeug 100 vom Aufnahmeberiech 201 aus, mit Blick in den Container 1 hinein. Durch die Öffnung der Andockstation 205 hindurch ist der Blick auf das Innere des Containers 1 freigegeben. Im Inneren des Containers 1 ist ein Ladungsträger 300 auf der Ladefläche angeordnet. Der Ladungsträger 300 befindet sich in gekoppelter Verbindung mit einem ersten Schieber des Verladeschlittens 17. Der Aufnahmeberiech 201 wird begrenzt durch seitliche Führungselemente 207a-d, an welchen die Längsseiten des Ladungsträgers 300 entlanggeführt werden können. Zwei weitere Führungselemente 209a-b begrenzen den Aufnahmebereich 201 stirnseitig mit Bezug auf den Ladungsträger 300, der in dem Aufnahmebereich 201 durch Übergabe mittels des Verladeschlittens 17 angeordnet werden soll. Bezüglich des ersten Schiebers des Verladeschlittens 17 wird auf die Figuren 3 und 4 verwiesen.

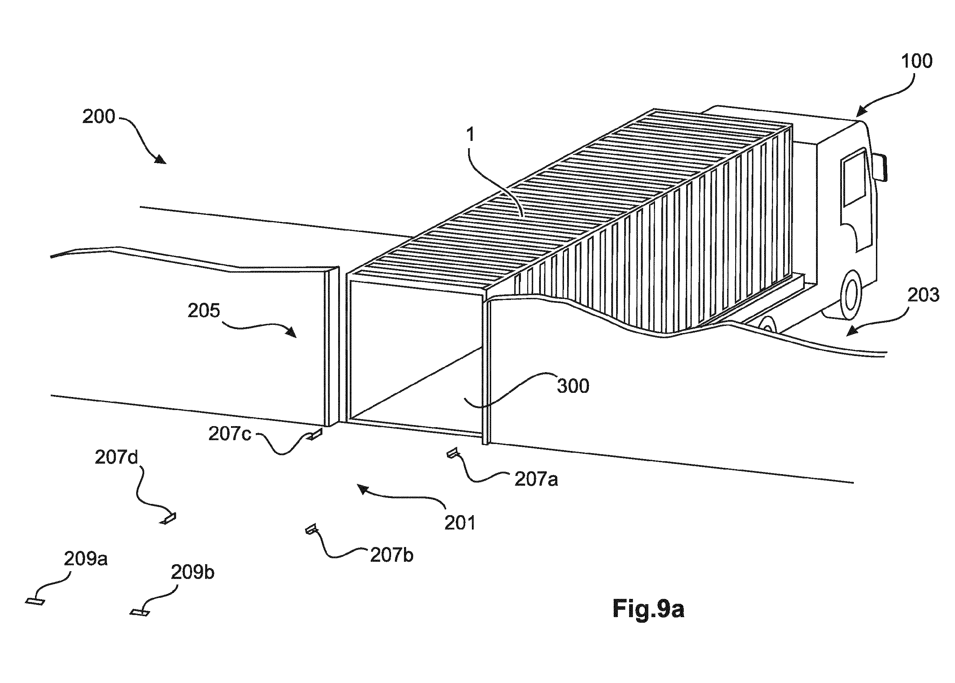

Die Figuren 9a-d illustrieren den Übergabevorgang des Ladungsträgers 300 von dem Container 1 des Fahrzeugs 100 an den Aufnahmebereich 201 im Logistiksystem 200. In Figur 9a ist der Ladungsträger 300 noch vollständig auf der Ladefläche innerhalb des Containers angeordnet. Die Ladefläche ist mittels der in Figur 6a-f gezeigten Verschwenkbewegungen so ausgerichtet, dass der Ladungsträger entlang der seitlichen Führungselemente 207a-d bis zu der den Ladungsträger 300 stirnseitig begrenzenden Führungselemente 209a,b geschoben werden kann. In Figur 9b ist der Verladeschlitten 17 im Wesentlichen vollständig entlang der Ladefläche des Containers 1 verfahren und der Ladungsträger 300 befindet sich fast in seiner durch die Führungselemente 209a,b begrenzten Endstellung im Aufnahmebereich 201.

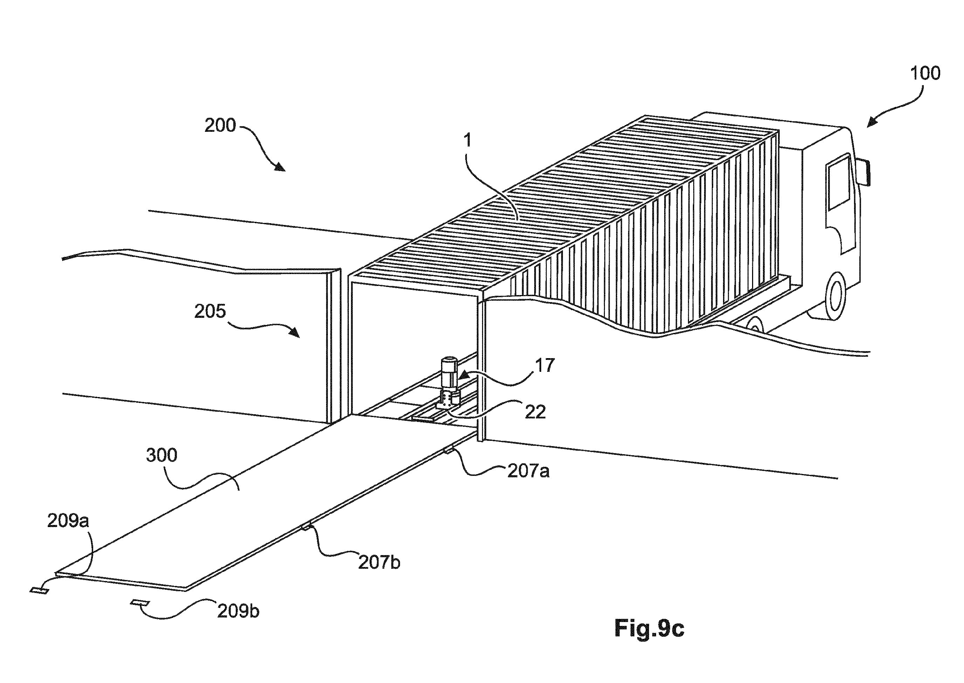

Um auch den letzten Ausschnitt bis in die Endstellung zurücklegen zu können, wird der Verladeschlitten 17 in die Position gemäß Figur 9c verbracht, d.h. ein gewisses Stück entgegen der zuvor zurückgelegten Bewegungsrichtung zurückverfahren. Der zweite Schieber 22 wird aus seiner Bereitschaftsstellung in die Eingriffsstellung verschwenkt, was in Figur 9c bereits geschehen ist. Nach erneutem Ineingriffbringen des Kupplungskopfes mit dem Ladungsträger 300 wird der Ladungsträger 300 durch erneutes Verfahren des Verladeschlittens in die in Figur 9b gezeigte Endposition gebracht und in Anschlag mit den Führungselementen 209a,b geschoben. Der Übernahmevorgang eines Ladungsträgers 300 aus dem Aufnahmebereich 201 in den Container 1 hinein vollzieht sich vorzugsweise in umgekehrter Reihenfolge wie mit Bezug auf die hier vorliegenden Figuren 9a-d beschrieben.

Das Außereingriffbringen, Zurücksetzen und Ineingriffbringen mit dem zweiten Schieber an den Verladeschlitten 17 kann, wie hier dargestellt, am Ende der Ladefläche des Containers 1 erfolgen. Alternativ ist es ebenfalls bevorzugt, den Wechsel zwischen erstem und zweitem Schieber an dem Verladeschlitten 17 vorzunehmen, wenn der Ladeträger noch weiter im Container 1 angeordnet ist, als dies in Figur 9b dargestellt ist. Der Ladungsträger 300 muss nur soweit aus seiner Endposition auf der Ladefläche des Containers 1 in Richtung des Aufnahmebereichs 201 verschoben werden, dass ein Zurücksetzen des Verladeschlittens 17, und Abschwenken des zweiten Schiebers 22 von der Bereitschaftsstellung in die Eingriffsstellung möglich ist.

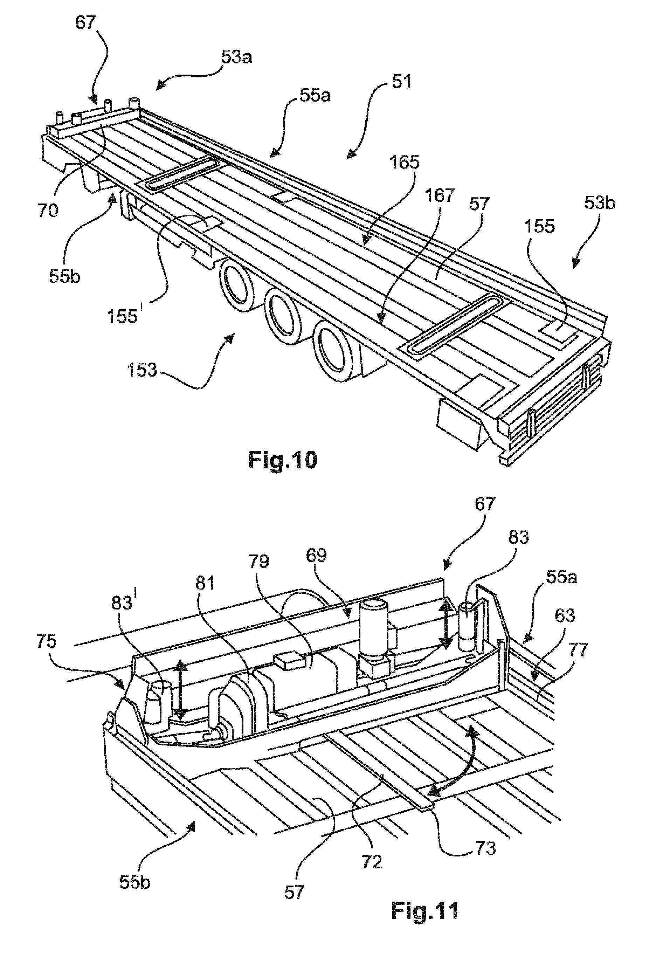

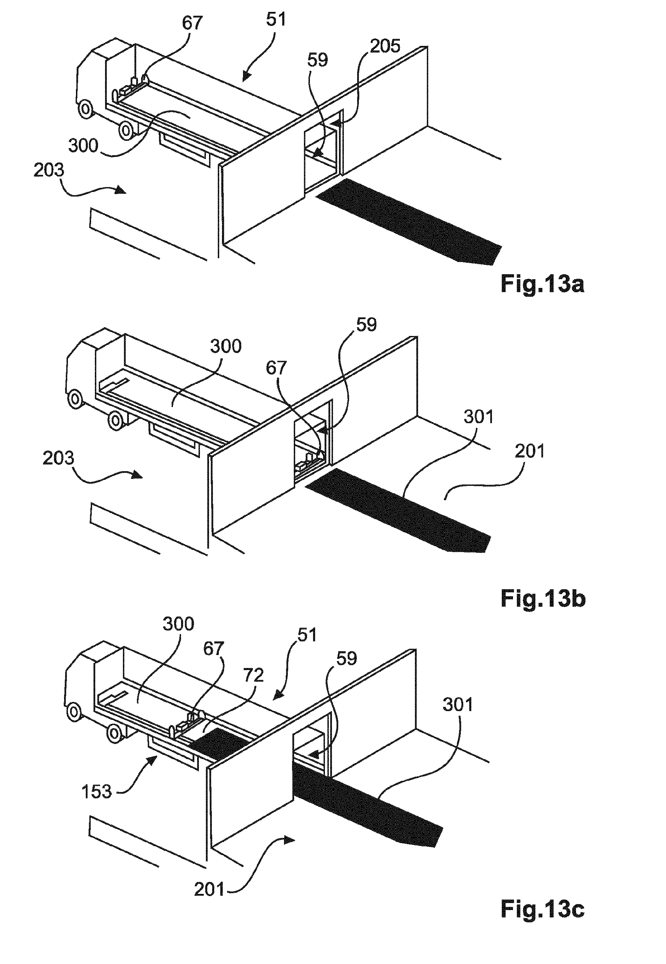

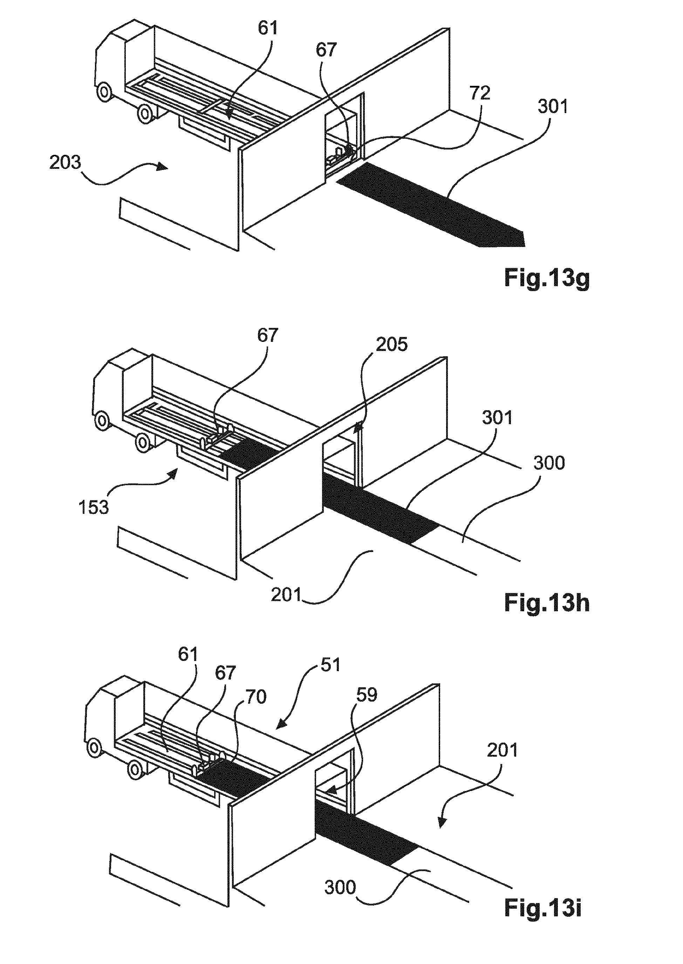

In Figur 10 ist eine Teilansicht eines weiteren Ausführungsbeispiels eines erfindungsgemäßen Containers 51 mit seiner Containerbodeneinheit 57 auf einem Auflieger 153 dargestellt. Der Container 51 weist eine distale Stirnseite 53a und eine proximale Stirnseite 53b auf, wobei unter proximal wiederum die der Laderaumöffnung 59 zugewandte Seite verstanden wird. Über die Laderaumöffnung 59 wird der Ladungsträger 300 (Fig. 13a) aus dem Container 51 heraus- oder hineinbewegt Der Container 51 weist zudem zwei Seitenflächen 55a, 55b auf, welche die parallel zueinander verlaufenden Längsseiten des Containers 51 definieren. Die Containerbodeneinheit 57 weist eine Ladefläche 61 auf, oberhalb der der Ladungsträger 300 im Container 51 verfahren wird.

An der distalen Stirnseite 53a des Containers 51 ist in seiner Parkstellung ein Verladeschlitten 67 angeordnet, mit Hilfe dem der Ladungsträger 300 parallel zu den Seitenflächen 55a, 55b in Längsrichtung des Containers 51 verfahrbar ist.

Figur 11 zeigt eine vergrößerte Darstellung des Verladeschlittens 67 in seiner Ausgangsposition auf der Ladefläche 61 des Containers, der über Führungen 63, welche entlang der Seitenflächen 55a, 55b des Containers 51 ausgerichtet sind, beweglich aufgenommen ist. Der Verladeschlitten 67 weist einen motorischen Antrieb 69 auf, der einen Elektromotor 79 und ein Koppelgetriebe 81 aufweist. Der Antrieb 69 ist mit nicht näher dargestellten, zu beiden Seiten des Verladeschlittens 67 angeordneten Zahnrädern verbunden, die jeweils mit einer Zahnstange 77 in Eingriff stehen, welche sich entlang der Führungen 63 erstreckt. Durch den Antrieb der Zahnräder wird der Verladeschlitten 67 entlang der Zahnstangen bewegt. Der Verladeschlitten weist zudem eine Hubeinheit 75 mit Verstellmotoren 83, 83' auf, über die der Verladeschlitten 67 in seiner Höhe oberhalb der Ladefläche 61 des Containers verstellbar ist. Der Verladeschlitten 67 weist darüber hinaus einen ersten Schieber 70 mit einem Kupplungskopf 71 und einen zweiten Schieber 72 mit einem Kupplungskopf 73 auf. Die Kupplungsköpfe 71, 73 sind dazu eingerichtet, mit einer korrespondierenden Ausnehmung an einer Stirnseite des Ladungsträgers 300 in Eingriff gebracht zu werden. Der erste bzw. zweite Schieber werden jeweils in Abhängigkeit von der Position des Ladungsträgers 300 auf der Ladefläche 61 des Containers 51 eingesetzt, wie nachfolgend näher erläutert.

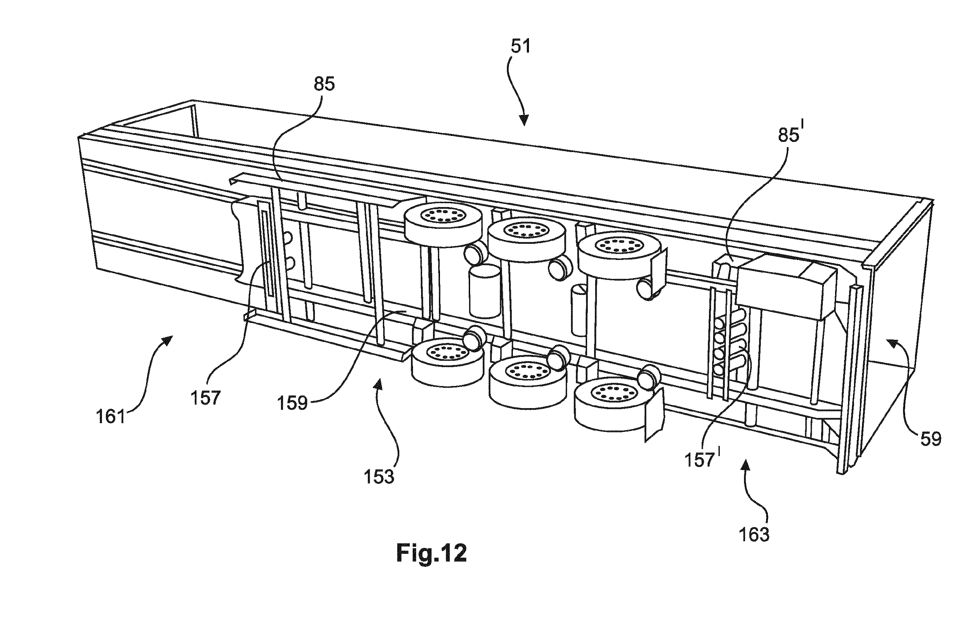

Figur 12 zeigt einen erfindungsgemäß zum Einsatz kommenden Auflieger 153, von seiner Unterseite aus, um dessen Aufbau zu verdeutlichen. Der Container 51 ist auf dem Auflieger 153 angeordnet und währenddessen der Container 51 transportiert wird, ist dieser mittels Containereckbeschlägen oder anderen gängigen Verriegelungselementen 155, 155' (Fig. 1) fest mit dem Auflieger 153 verbunden. Der Container 153, der als wechselbarer Iso-Container oder als dem Auflieger fest zugeordneter Kofferaufbau ausgeführt sein kann, wird über zwei als Quervorschubeinheiten ausgebildete Antriebe 157, 157' auf der Ladefläche des Aufliegers 153 translatorisch bewegt oder um eine vertikale Achse verschwenkt. Die Antriebe 157, 157' sind am Fahrgestell 159 des Aufliegers 153 angeordnet, welche an auf der Unterseite der Containerbodeneinheit 57 angeordneten Kopplungselementen 85, 85' angreifen. Die Antriebe 157, 157' sind, bezogen auf die Laderaumöffnung 59 des Containers 51, in einem distalen und einem proximalen Bereich 161, 163 des Aufliegers 153 angeordnet. Mittels der Antriebe 157, 157' können verschiedene, wie in den Figuren 6a bis 6f gezeigten translatorischen Bewegungen und Verschwenkungen des Containers 51 relativ zum Auflieger 153 durchgeführt werden, um den Container 51 vor dem Umladevorgang des Ladungsträgers 300 zu einer Öffnung einer Andockstation 205 eines Logistiksystemes 200 genau auszurichten. Dabei haben die Antriebe 157, 157' dieselbe Funktionsweise wie die in den Figuren 6a bis 6f gezeigten Antriebe. Zudem sind zwischen dem Container 51 und dem Auflieger 153 eine oder mehrere Gleitlagerplatten 165, 167 (Fig. 10) vorgesehen, welche die Reibung zwischen Container und Fahrgestell gering halten.

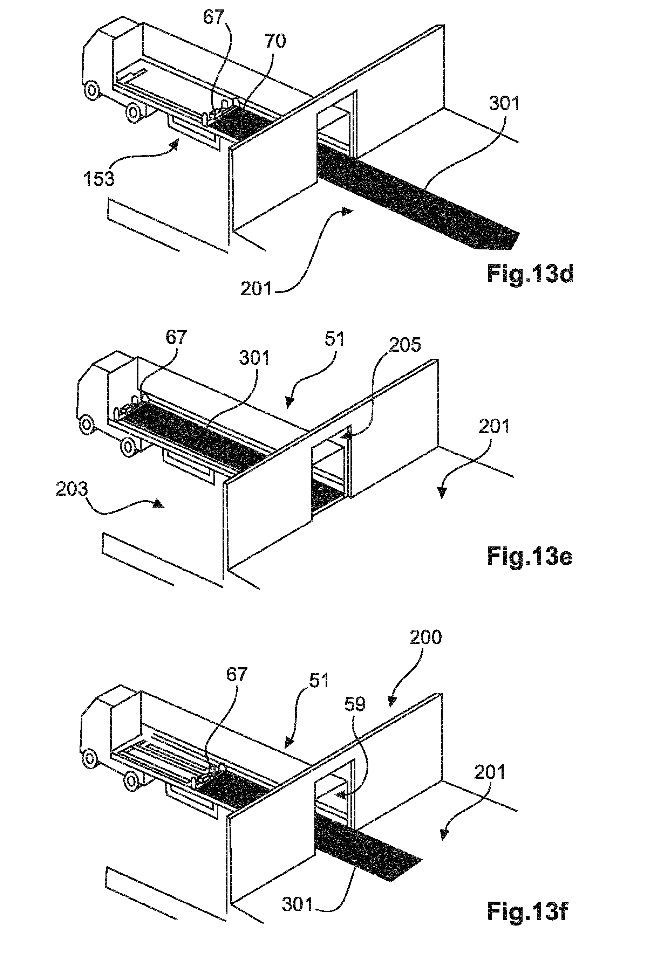

Die Figuren 13a bis 13i verdeutlichen den Wechsel bzw. Austausch eines auf dem Auflieger 153 angeordneten leeren Ladungsträgers durch einen im Logistiksystem 200 für den Abtransport bereitgestellten, beladenen Ladungsträger 300'. Der nachfolgend beschriebene Umladevorgang erfolgt nachdem der Container zur Öffnung der Andockstation 205, wie gemäß der in den Figuren 6a bis 6f gezeigten Ausrichtbewegungen, zur Öffnung der Andockstation 205 ausgerichtet wurde. Der leere Ladungsträger 300 verbleibt zunächst innerhalb des Containers 51, wobei der Verladeschlitten 67 in seiner Ausgangsposition vom leeren Ladungsträger entkoppelt und in seiner Höhe verstellt wird, dass er oberhalb des leeren Ladungsträgers 300 in Richtung der Laderaumöffnung 59 (Fig. 13b) verfahren werden kann. An der Laderaumöffnung 59 angelangt, wird der Verladeschlitten 67 über seinen zweiten, langen Schieber 72 mit den beladenen Ladungsträger 301 gekoppelt und der Verladeschlitten zurück in Richtung der distalen Stirnseite 53a des Containers 51 bewegt, wie Figur 13c zeigt. Dabei wird der beladenen Ladungsträger 301 auf den leeren Ladungsträger im Container 300 verfahren. Nach Zurücklegen einer ersten Teilstrecke wird der zweite Schieber 72 außer Eingriff mit dem Ladungsträger 301 gebracht und der Verladeschlitten entgegen der vorherigen Bewegungsrichtung auf den Ladungsträger 301 zu bewegt, um den ersten, kurzen Schieber 70 des Verladeschlitten 67 in Eingriff mit dem Ladungsträger 301 zu bringen (Fig. 13d). Anschließend wird der Ladungsträger 301 vollständig in den Container 51 gezogen, sodass beide Ladungsträger 300, 301 deckungsgleich zueinander angeordnet sind. Nach Erreichen der Ausgangsposition des Ladeschlittens 67 (Fig. 13e) wird die Verbindung zum Ladungsträger 301 aufgehoben und der Verladeschlitten 67 in seiner Höhe nach unten verfahren, so dass er mit seinem ersten Schieber 70 nunmehr mit dem unbeladenen Ladungsträger 300, welcher unterhalb des beladenen Ladungsträgers 301 angeordnet ist, in Eingriff gebracht werden kann. Wie Figur 13f verdeutlicht, werden beide Ladungsträger 300, 301 gemeinsam aus dem Container 51 auf den Aufnahmebereich 201 des Logistiksystems 200 herausbewegt. Während des Herausschiebens wird wiederum nach dem Zurücklegen einer Teilstrecke der Wechsel vom ersten, kurzen Schieder 70 auf den zweiten, langen Schieber 72 vollzogen, so dass die Ladungsträger 300, 301 um ein vorbestimmtes Maß über die Laderaumöffnung 59 hinaus auf den Aufnahmebereich 201 geschoben werden (Fig. 13g). Anschließend wird der Schieber 72 außer Eingriff mit dem unbeladenen Ladungsträger 300 gebracht und anschließend unmittelbar die Verbindung zum beladenen Ladungsträger 301 hergestellt. Anschließend wird nur der beladene Ladungsträger 301 in den auf dem Auflieger 153' befindlichen Container 51 bewegt, so dass der leere Ladungsträger 300 im Aufnahmebereich 201 des Logistiksystems 200 verbleibt. Nach einer Teilstrecke wechselt der Verladeschlitten 67 wieder selbsttätig vom zweiten, langen Schieber 72 auf den ersten, kurzen Schieber 70. Der nunmehr nahezu in Anlage mit dem Verladeschlitten 67 stehende, beladene Ladungsträger 301 wird über den Verladeschlitten in den Container 51 auf dessen Ladefläche 61 hineingezogen, bis der Verladeschlitten seine Ausgangsposition erreicht hat und damit der Wechsel bzw. Austausch der Ladungsträger 300, 301 abgeschlossen ist.

Teil des in den Figuren 13a bis 13i gezeigten Logistiksystems 200 ist eine im Übernahme- und Übergabebereich 203 für den das Fahrzeug 100 höhenverstellbare, jedoch nicht näher dargestellte Hubeinheit, mittels der die der proximalen Stirnseite 53b des Containers zugeordneten Seite des Fahrzeugs 100 derart in der Höhe verstellt werden kann, dass die Ladefläche 11, 61 auf ein zur Aufstellfläche des Aufnahmebereiches 201 unterschiedliches Höhenniveau angehoben oder abgesenkt werden kann. Speziell während der ersten Bewegung des beladenen Ladungsträgers 301 in den Container 51, wird die der proximalen Stirnseite 53b des Containers zugeordnete Seite des Aufliegers 153 derart angehoben, dass die Aufstellfläche des Aufnahmebereichs 201 fluchtend zu der Oberseite des leeren Ladungsträgers 300 ausgerichtet ist und somit der beladene Ladungsträger 301 absatzfrei auf den leeren Ladungsträgers 300 verfahren wird. Weiterhin kann die der proximalen Stirnseite 53b des Containers zugeordnete Seite des Fahrzeugs 100 derart in ihrer Höhe abgesenkt werden, dass die Oberseite des leeren Ladungsträgers mit der umliegenden Aufstellfläche des Aufnahmebereiches auf einem Höhenniveau ausgerichtet sind, so dass am Ende des Wechselvorganges der beladene Ladungsträger 300' absatzfrei auf einer Ebene in den leeren Container 51 verfahren wird.

Die verschiedenen vorstehend beschriebenen bevorzugten Ausführungsformen und Ausführungsbeispiele können im Rahmen der Erfindung miteinander kombiniert werden, sofern sie sich nicht gegenseitig technisch ausschließen. Gleiche Bauteile sind mit identischen Bezugszahlen bezeichnet.

## Patentansprüche

1. Container (1, 51) zur Beförderung eines Ladungsträgers auf einem Fahrzeug, wobei der Ladungsträger an die Abmessungen des Container-Inneren angepasst ist, mit einer Containerbodeneinheit (7, 57), welche an mehreren Stellen mit dem Fahrzeug verriegelbar ist, und einer Laderaumöffnung (9, 59), welche an einer Seite des Containers (1, 51) angeordnet ist,
**dadurch gekennzeichnet, dass** der Container (1, 51) einen Verladeschlitten (17, 67) aufweist, welcher Kopplungsmittel zum Fassen des Ladungsträgers aufweist, und auf der Containerbodeneinheit in Längsrichtung des Containers (1, 51) verfahrbar ist, um den Ladungsträger (300, 301) in gekoppeltem Zustand entlang einer Ladefläche (11, 61) des Containers (1, 51) zu bewegen.

2. Container (1) nach Anspruch 1,
wobei die Ladefläche (11, 61) eine in Längsrichtung des Containers (1, 51) ausgerichtete Führung (13, 63) aufweist, innerhalb welcher ein korrespondierend ausgebildeter Abschnitt des Verladeschlittens (17, 67) verfahrbar ist.

3. Container (1) nach Anspruch 2,
wobei in der Führung (13, 63) eine Zahnstange (27, 77) ausgebildet ist, und der Verladeschlitten (17, 67) ein oder mehrere korrespondierende Zahnräder (29) aufweist, welche mit der Zahnstange in Eingriff stehen und mittels eines Motors (19) angetrieben sind.

4. Container (1, 51) nach einem der vorstehenden Ansprüche,
wobei die Kopplungsmittel einen ersten Schieber (20, 70) aufweisen, welcher einen Kupplungskopf (21, 71) zum formschlüssigen Eingreifen in eine korrespondierend ausgebildete Ausnehmung in dem Ladungsträger (300, 301) aufweist, wobei der erste Schieber (20, 70) an dem Verladeschlitten (17, 67) höhenverstellbar ist.

5. Container (1, 51) nach einem der vorstehenden Ansprüche,
wobei die Kopplungsmittel einen zweiten Schieber (22, 72) aufweisen, welcher einen Kupplungskopf (23, 73) zum formschlüssigen Eingreifen in die korrespondierend ausgebildete Ausnehmung in dem Ladungsträger (300, 301) aufweist, wobei der zweite Schieber (22, 72) an dem Verladeschlitten (17, 67) höhenverstellbar ist.

6. Container (1, 51) nach Anspruch 5,
wobei der zweite Schieber (22, 72), vorzugsweise um eine horizontale Achse X, zwischen einer Bereitschaftsstellung und einer Eingriffsstellung hin- und her schwenkbar ist.

7. Container (1, 51) nach einem der Ansprüche 5 oder 6,
wobei der Kupplungskopf (21, 71) des ersten Schiebers (20, 70) in horizontaler Richtung einen ersten Abstand zu dem Verladeschlitten (17, 67) aufweist, und der Kupplungskopf (23, 73) des zweiten Schiebers (22, 72) in horizontaler Richtung einen zweiten Abstand zu dem Verladeschlitten (17, 67) aufweist, wobei der zweite Abstand größer ist als der erste Abstand, wenn sich der zweite Schieber in der Eingriffsstellung befindet.

8. Fahrzeug (100) zur Beförderung eines Ladungsträgers (300, 301), mit einem Auflieger, und einem auf dem Auflieger (103, 153) angeordneten Container (1, 51), wobei der Ladungsträger an die Abmessungen des Container-Inneren angepasst ist,
**dadurch gekennzeichnet, dass** der Container (1, 51) nach einem der vorstehenden Ansprüche ausgebildet ist.

9. Fahrzeug (100) nach Anspruch 8,
wobei der Container (1, 51) Mittel zum translatorischen Bewegen und/oder Verschwenken um die vertikale Achse aufweist.

10. Fahrzeug (100) nach Anspruch 8 oder 9,
wobei die Mittel zum translatorischen Bewegen und/oder Verschwenken der Ladefläche einen ersten, in einem proximalen Bereich des Containers (1, 51) angeordneten Antrieb und einen zweiten, in einem distalen Bereich des Containers (1, 51) angeordneten Antrieb zum jeweiligen Bewegen der Ladefläche (11, 61) relativ zu dem Auflieger aufweisen, wobei die Antriebe wahlweise synchron oder asynchron steuerbar sind.

11. Fahrzeug (100) nach einem der Ansprüche 8 bis 10,
wobei der Auflieger (153) Mittel zum Verschwenken um die vertikale Achse und/oder translatorischen Bewegen des Containers (1, 51) zum Auflieger aufweist.

12. Fahrzeug (100) nach Anspruch 11,
wobei an der dem Auflieger (1, 51) zugewandten Unterseite der Containerbodeneinheit (7, 57) Kopplungselemente (85, 85') angeordnet sind, die mit den am Auflieger (153) angeordneten Mitteln zum Bewegen und/oder Verschwenken des Containers (1, 51) korrespondieren.

13. Fahrzeug (100) nach einem der Ansprüche 8 bis 12,
wobei zwischen dem Container (1, 51) und dem Auflieger (153) eine oder mehrere Gleitlagerplatten (165, 167) vorgesehen sind.

14. Logistiksystem (200) zur Übernahme eines Ladungsträgers von einem Container (1, 51) und zur Übergabe des Ladungsträgers an den Container (1, 51), mit
- einem Container (1, 51) zur Beförderung des Ladungsträgers,
- einem Ladungsträger (300, 301), der an die Abmessungen des Container-Inneren angepasst ist,
- einem Übernahme- und Übergabebereich (203), in dem der Container (1, 51) anordenbar ist,
- einem Aufnahmebereich (201) für einen Ladungsträger, in welchen hinein der Ladungsträger (300, 301) aus dem Container (1, 51) übergebbar ist und aus welchem heraus der Ladungsträger (300, 301) übernehmbar ist,
**dadurch gekennzeichnet, dass** der Container (1, 51) nach einem der Ansprüche 1 bis 10 ausgebildet ist.

15. Logistiksystem nach Anspruch 14,
wobei der Container (1, 51) auf einem Fahrzeug (100) nach einem der Ansprüche 11 bis 19 angeordnet ist, und der Übernahme- und Übergabebereich (203) mit dem Fahrzeug (100) befahrbar ist.

16. Logistiksystem nach Anspruch 14 oder 15,
wobei der Aufnahmebereich (201) für den Ladungsträger (300, 301) und der Übernahme- und Übergabebereich für den Container (1, 51) und/oder das Fahrzeug (100) zueinander benachbart angeordnet sind, und
wobei der Aufnahmebereich (201) bodenseitig ein oder mehrere Führungselemente (207, 209) aufweist, die den Aufnahmebereich begrenzen und an die Abmessungen des Ladungsträgers (300, 301) angepasst sind.

17. Logistiksystem nach einem der Ansprüche 14 bis 16,
wobei der Übernahme- und Übergabebereich (203) eine höhenverstellbare Hubeinheit aufweist.
